Europäisches Patentamt

European Patent Office

Office européen des brevets

(11) Veröffentlichungsnummer : **0 378 882 B1**

(12) # EUROPÄISCHE PATENTSCHRIFT

(45) Veröffentlichungstag der Patentschrift :
**12.08.92 Patentblatt 92/33**

(51) Int. Cl.⁵ : **F16L 13/04**

(21) Anmeldenummer : **89250122.2**

(22) Anmeldetag : **20.12.89**

(54) **Unlösbare Verbindung von dünnwandigen Rohren unter Verwendung eines Pressfittings.**

(30) Priorität : **17.01.89 DE 3901562**

(43) Veröffentlichungstag der Anmeldung :
**25.07.90 Patentblatt 90/30**

(45) Bekanntmachung des Hinweises auf die
Patenterteilung :
**12.08.92 Patentblatt 92/33**

(84) Benannte Vertragsstaaten :
**AT BE CH DE ES FR GB GR IT LI LU NL SE**

(56) Entgegenhaltungen :
**DE-A- 2 046 962
DE-A- 2 725 280
GB-A- 2 134 614
US-A- 3 730 567**

(73) Patentinhaber : **MANNESMANN
Aktiengesellschaft
Mannesmannufer 2
W-4000 Düsseldorf 1 (DE)**

(72) Erfinder : **Unewisse, Heinz
Aug.-Schmidt-Strasse 40
W-4330 Mülheim/Ruhr (DE)**
Erfinder : **Diederichs, Rolf, Dr.-Ing.
Bue 18
W-4156 Willich 1 (DE)**

(74) Vertreter : **Meissner, Peter E., Dipl.-Ing. et al
Patentanwaltsbüro Meissner & Meissner,
Herbertstrasse 22
W-1000 Berlin 33 (DE)**

EP 0 378 882 B1

## Beschreibung

Beim Transport von aggressiven Wässern in der Installationstechnik z. B. Meerwasser oder Thermalwasser werden durch die Wasserinhaltsstoffe wie z. B Chloride hinsichtlich der Korrosionsbeständigkeit hohe Anforderungen an die wasserführenden Leitungen gestellt. Zur Überwindung dieses Problems werden oftmals nichtrostende Stähle eingesetzt, die aber trotz hoher Legierungsgehalte Anwendungsgrenzen haben. Überschreiten die Chloridgehalte der Wässer bestimmte Werte, dann versagen auch hochlegierte nichtrostende Stähle.

Eine Problemlösung für den Transport oben genannter Wässer ist der Einsatz des Wrkstoffes Titan bzw. einer Titanlegierung, die im hohen Maße korrosionsbeständig sind und ein niedriges spezifisches Gewicht aufweisen. Zur Lösung der Korrosionsprobleme im Bereich z. B. der Meerwasser- oder Thermalwassertechnik wird Titan bisher nur sehr eingeschränkt eingesetzt, da die bisherige Verbindungstechnik des Schutzgasschweißens eine hochspezialisierte und sehr aufwendige Technik darstellt. Titan wird daher bisher vorzugsweise in der Kraftwerkstechnik und Chemietechnik verwendet.

Eine Rohrverbindung für Leitungsrohre unter Vermeidung des Schweißens ist aus der DE-A-27 25 280 bekannt. Bei dieser Verbindung werden dünnwandige Leitungsrohre aus Metall mit ihren Enden in eine verformbare Muffe bis zu einem Anschlag eingeschoben und mittels eines auf die Muffe angesetzten Preßwerkzeuges in kaltem Zustand mit der Muffe unlösbar verbunden. Für die Dichtheit der Verbindung sind an den Enden der Muffe Ringwülste angeformt, in der je ein Dichtring angeordnet ist. Zur Übernahme von auftretenden Längskräften werden beim Verpressen im Abstand zu den Ringwülsten auf der Muffenhülse örtlich begrenzte Sicken angeformt.

Eine Rohrverbindung gemäß dem Oberbegriff des Anspruchs 1 ist aus der GB-A-2134614 bekannt.

Aufgabe der Erfindung ist es, eine Verbindungstechnik anzugeben, mit der bei verbesserter Qualität der Verbindung in einfacher, sicherer und kostengünstiger Weise dünnwandige Rohre aus Titan oder einer Titanlegierung miteinander verbunden werden können.

Diese Aufgabe wird durch die Verwendung eines Preßfittings gemäß dem Hauptanspruch gelöst.

Der Vorteil dieser Verbindungstechnik liegt darin, daß damit die Anwendung des Werkstoffes Titan bzw. einer Titanlegierung für weite Bereiche der Installationstechnik mit besonderer Anforderung an die Korrosionsbeständigkeit unter wirtschaftlichen Gesichtspunkten möglich wird. Außerdem wird die Verwendung dieser Werkstoffe mittels der vorgeschlagenen Verbindungstechnik von Fachinstallationsbetrieben beherrschbar. Ein weiterer Vorteil dieser Verbindungstechnik liegt darin, daß durch die kalte Verpressung im Gegensatz zum Schweißen keine Brandgefährdung auftritt und eine Nachkontrolle der Verbindung entfallen kann, da durch das automatisch arbeitende Preßwerkzeug in jedem Fall eine dichte Verbindung gewährleistet ist.

Damit auch höhere in Axialrichtung wirkende Kräfte sicher aufgenommen werden können, wird weiterbildend vorgeschlagen, zusätzlich zu der in den einen Dichtring enthaltenden Fittingsbereich auch an anderen Stellen eine Verpressung vorzunehmen, um damit die mechanische Verklammerung zu verbessern.

In der Zeichnung wird das Prinzip der Verwendung des Preßfittings näher erläutert.

Es zeigen:

Figur 1 einen Teillängsschnitt durch eine Preßfittingverbindung mit noch angesetztem Preßwerkzeug

Figur 2 einen Schnitt entlang der Linie A-A in Figur 1

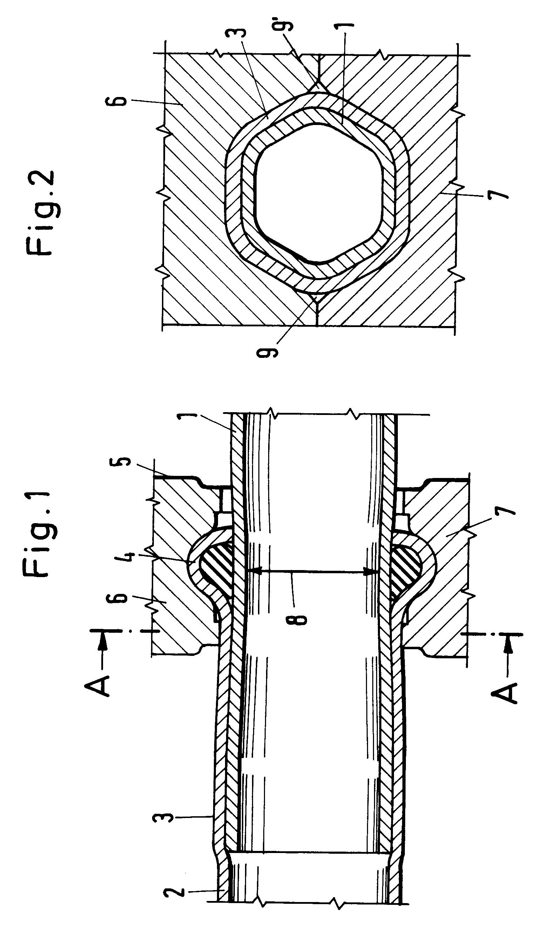

In Figur 1 ist ein Teillängsschnitt durch eine Preßfittingverbindung mit noch angesetztem Preßwerkzeug dargestellt. Das aus Titan oder einer Titanlegierung hergestellte Rohr 1 wird mit seinem Ende bis zum Anschlag 2 des Preßfittings 3 hineingeschoben. Der Preßfitting 3 weist je ein sickenförmiges Ende 4 auf, in dessen Hohlraum der Runddichtring 5 aus Butylkautschuk angeordnet ist. Die beiden Backen 6,7 des hier nicht dargestellten Preßwerkzeuges umfassen das sickenförmige Ende 4 des Preßfittings 3 und durch hydraulisch oder elektromechanisch aufgebrachten Druck werden die beiden Backen 6,7 geschlossen und der Preßfitting 3 mit dem Rohr 1 form- und kraftschlüssig miteinander verbunden. Die Verringerung des Innendurchmessers 8 des Rohres 1 im Bereich der Verpressung wird bewußt angestrebt, um die mechanische Verklammerung zu verbessern. Dadurch steigt der Widerstand gegen die auftretenden Längskräfte, die versuchen, das Rohr 1 aus dem Preßfitting 3 herauszudrücken.

Bei der Verpressung wird der Durchmesser des sickenförmigen Endes 4 des Preßfittings 3 verringert und der Hohlraum in der Sicke verkleinert, so daß der eingeschlossene Runddichtring 5 elastisch verformt und damit die Dichtwirkung erzielt wird.

Figur 2 zeigt einen Schnitt entlang der Linie A-A in Figur 1. In diesem Querschnitt ist die form- und kraftschlüssige Verklammerung des Preßfittings 3 mit dem Rohr 1 gut zu erkennen. Die beiden Backen 6,7 des nicht dargestellten Preßwerkzeuges sind voll zugefahren und bedingt durch die Form der Backen 6,7 entsteht in etwa eine sechseckige Querschnittskonfiguration der Verbindung. Der kleine Hohlraum 9,9' in der Teilungsebene der beiden Backen 6,7 ist erforderlich, damit überschüssiges Material bei der Verpressung abfließen kann.

**Patentansprüche**

1. Unlösbare Verbindung von dünnwandigen Rohren (1) unter Verwendung eines Preßfittings (3) mit sikkenförmigen, einen Dichtring (5) aufnehmenden Enden (4), wobei die Rohre (1) mittels eines Preßwerkzeuges im kalten Zustand form- und kraftschlüssig mit dem Preßfitting (3) verbunden werden und mindestens der den Dichtring (5) enthaltende Bereich des Preßfittings (3) mit dem Rohr (1) verpreßt wird, wobei der Innendurchmesser (8) des Rohres (1) im Bereich der Verpressung verringert wird und in unmittelbarer Nachbarschaft des sickenförmigen Endes (4) des Preßfittings (3) eine etwa sechseckige Querschnittskonfiguration angeformt wird
**dadurch gekennzeichnet,**
daß, insbesondere zum Transport aggressiver Wässer in der Installationstechnik, die nahtlosen oder geschweißten Rohre (1) und der Preßfitting (3) aus Titan oder einer Titanlegierung bestehen, wobei die Rohre (1) einen Außendurchmesser im Bereich von 10 bis 100 mm und eine Wanddicke im Bereich von 0,5 bis 3,0 mm aufweisen.

2. Verbindung nach Anspruch 1,
**dadurch gekennzeichnet,**
daß daß zusätzlich auch andere Bereiche des Preßfittings (3) mit dem Rohr (1) verpreßt werden.

**Claims**

1. A non-detachable connection for thin-walled pipes (1) using a press fitting (3) with bead-shaped ends (4) which receive a sealing ring (5), the pipes (1) being connected in positive and non-positive manner to the press fitting (3) in the cold state by means of a pressing tool and at least the region of the press fitting (3) containing the sealing ring (5) being pressed with the pipe (1), the internal diameter (8) of the pipe (1) being reduced in the region of pressing and an approximately hexagonal cross-sectional configuration being formed in the immediate vicinity of the bead-shaped end (4) of the press fitting (3),
**characterised in that,**
in particular for transporting aggressive water in plumbing technology, the seamless or welded pipes (1) and the press fitting (3) are made of titanium or a titanium alloy, the pipes (1) having an external diameter in the range of 10 to 100 mm and a wall thickness in the range of 0.5-to 3.0 mm.

2. A connection according to Claim 1,
**characterised in that**
additionally other regions of the press fitting (3) are also pressed with the pipe (1).

**Revendications**

1. Raccord indémontable de tuyaux à parois minces (1) par emboîtement en force (3), comprenant des extrémités en forme de moulures (4) où est logé un anneau d'étanchéité (5), les tuyaux (1) étant raccordés, à froid, avec l'emboîtement en force (3) au moyen d'un outil de pression, de manière solidaire par la forme et par la force, et au moins la zone de l'emboîtement en force (3) contenant l'anneau d'étanchéité (5) étant comprimée avec le tuyau (1), le diamètre intérieur (8) du tuyau (1) étant réduit dans la zone de compression et une configuration de coupe transversal sensiblement hexagonale étant formée au voisinage immédiat de l'extrémité en forme de moulure (4) de l'emboîtement en force (3),
**caractérisé en ce que,**
en particulier pour le transport d'eaux agressives en technique d'installation, les tuyaux sans soudure ou soudés (1) et l'emboîtement en force (3) sont réalisés en titane ou en alliage de titane, les tuyaux (1) présentant un diamètre extérieur de l'ordre de 10 à 100 mm et une épassieur de paroi de l'ordre de 0,5 à 3,0 mm.

2. Raccord selon la revendication 1,
**caractérisé en ce que,**
à titre supplémentaire, d'autres zones de l'emboîtement en force (3) sont comprimées avec le tuyau (1).

# Fig.1

# Fig.2

EP 0 378 882 B1